# EUROPÄISCHE PATENTSCHRIFT

(11) **EP 2 927 064 B1**
(45) Veröffentlichungstag und Bekanntmachung des Hinweises auf die Patenterteilung: **21.08.2019**
(21) Anmeldenummer: 15158431.5
(22) Anmeldetag: 10.03.2015
(51) Int. Cl.: B60T 7/06, G05G 5/03, B60T 11/18, G05G 5/05

(54) **PEDALKRAFTERZEUGUNGSVORRICHTUNG**
PEDAL FORCE CREATION DEVICE
DISPOSITIF DE GÉNÉRATION DE FORCE DE PÉDALAGE

(30) Priorität: 14.03.2014 DE 102014204756
(43) Veröffentlichungstag der Anmeldung: 07.10.2015
(73) Patentinhaber: Schaeffler Technologies AG & Co. KG, 91074 Herzogenaurach (DE)
(72) Erfinder: Krahtov, Luben, 76530 Baden-Baden (DE)

(56) Entgegenhaltungen:
- EP-A1- 0 771 705
- DE-A1- 4 324 041
- DE-A1-102004 011 622
- DE-A1-102007 016 975
- DE-A1-102008 041 349
- DE-A1-102010 000 882
- DE-A1-102010 034 671
- DE-A1-102011 016 240
- DE-C1- 19 838 568
- US-A1- 2002 117 893
- US-A1- 2005 082 909
- US-A1- 2013 233 118

## Beschreibung

Die Erfindung betrifft eine Pedalkrafterzeugungsvorrichtung, insbesondere für ein Kupplungspedal oder ein Bremspedal für ein Kraftfahrzeug.

Kupplungen in Kraftfahrzeugen werden mit einem Kupplungspedal durch den Fahrer betätigt. Dabei muss der Fahrer mit dem Fuß das Pedal entgegen der Rückstellkraft der Elastizitäten und Federkräfte im Betätigungssystem und in der Kupplung betätigen. Die Betätigungskraft hat dabei einen typischen vom Fahrer erwarteten Kraftverlauf. Wird die Kupplung elektronisch gesteuert betätigt, wobei ein Aktuator die Betätigung der Kupplung übernimmt, kann dennoch ein Pedal für den Fahrer vorgesehen sein, um dem Fahrer die Steuerung der Betätigung der Kupplung zu überlassen, obwohl keine direkte mechanische Verbindung oder Druckmittelverbindung zwischen dem Pedal und der Kupplung mehr vorliegt. Damit der Fahrer aber die für die tatsächliche Kupplungsbetätigung resultierende Rückstellkraft spürt, sind Pedalkrafterzeugungsvorrichtungen bekannt geworden, die eine Pedalkraft als Kupplungsrückstellkraft simulieren.

In der DE 43 27 881 C1 ist eine hydraulische Kupplungsbetätigungsvorrichtung bekannt geworden, bei welcher eine Pedalbetätigung der Kupplung durchgeführt werden kann. Da aber auch ein Elektromotor als Antriebsmotor vorgesehen ist, wird in diesen Betriebsarten die Betätigung der Kupplung mittels des Pedals ausgeschaltet und die Pedalbetätigung wird auf einen Ersatzspeicher umgeschaltet.

Weitere derartige Vorrichtungen sind aus den US 2005/082909 A1, US 2002/117893 A1, EP 0 771 705 A1 und aus der DE 10 2008 041 349 A1 bekannt.

Es ist die Aufgabe der Erfindung, eine Pedalkrafterzeugungsvorrichtung zu schaffen, welche einfach und klein aufgebaut ist und dennoch eine realistische Gegenkraft für ein zu betätigendes Pedal erzeugt.

Die Aufgabe der Erfindung wird mit den Merkmalen von Anspruch 1 gelöst.

Ein Ausführungsbeispiel der Erfindung betrifft eine Pedalkrafterzeugungsvorrichtung mit einer Kolben-Zylindereinheit mit einem Zylinder und in dem Zylinder angeordneten ersten Kolben, der entgegen der Rückstellkraft eines Kraftspeichers verlagerbar ist, wobei in dem Zylinder ein zweiter Kolben verlagerbar angeordnet ist, wobei zwischen dem ersten Kolben und dem zweiten Kolben ein geschlossenes, flexibles Membranelement mit einer fluiden Füllung angeordnet ist. Dadurch wird bei einer Kolbenbetätigung des zweiten Kolbens aufgrund einer Pedalbetätigung sowohl der zweite Kolben als auch der erste Kolben und das Membranelement verlagert, was zu einer Rückstellkraft führt, die einer Rückstellkraft eines Pedals beispielsweise zur Kupplungsbetätigung ähnlich ist.

Dabei ist es vorteilhaft, wenn der erste Kolben und/oder der zweite Kolben einen Außendurchmesser aufweist bzw. aufweisen, welcher kleiner ist als der Innendurchmesser des Zylinders. Dadurch kann sich das Membranelement zwischen Kolben und Zylinder bewegen und die Rückstellkraft dadurch verändern.

So ist es vorteilhaft, wenn zwischen dem ersten Kolben und der umgebenden Wand des Zylinders ein Spalt ausgebildet ist und/oder zwischen dem zweiten Kolben und der umgebenden Wand des Zylinders ein Spalt ausgebildet ist, in welchem das Membranelement zumindest teilweise aufgenommen werden kann. Dies moduliert die Rückstellkraft vorteilhaft.

Auch ist es vorteilhaft, wenn der Außendurchmesser des ersten Kolbens und/oder der Außendurchmesser des zweiten Kolbens mit der axialen Länge des Kolbens veränderlich ausgebildet ist. So wird ebenso eine Modulation der Rückstellkraft erzeugt, wenn das Membranelement in das sich derart moduliert entwickelnde Volumen eingreift.

Dabei ist es zweckmäßig, wenn der Außendurchmesser des ersten Kolbens und/oder des zweiten Kolbens eine umlaufende Einschnürung oder mehrere umlaufende Einschnürungen ausbildet. Dies fördert die Modulation der Rückstellkraft, weil sich das Membranelement in die Einschnürung bewegen kann.

Auch ist es zweckmäßig, wenn der zweite Kolben mit einer Kolbenstange verbunden ist und der Außendurchmesser des zweiten Kolbens hin zur Kolbenstange abnimmt.

Weiterhin ist es zweckmäßig, wenn der erste Kolben an einer Stirnfläche eine Ausnehmung aufweist, in welche der Kraftspeicher eingreift. So kann eine platzsparende Bauweise gefunden werden.

Auch ist es zweckmäßig, wenn der Kraftspeicher sich zwischen dem Kolben und einer Innenfläche des Zylinders abstützt.

Besonders zweckmäßig ist es, wenn die Membran eine Rollmembran ist.

Die vorliegende Erfindung wird nachfolgend anhand bevorzugter Ausführungsbeispiele in Verbindung mit den zugehörigen Figuren näher erläutert:
Dabei zeigen:
- Figur 1: eine schematische Ansicht einer Pedalkrafterzeugungsvorrichtung im betätigten Zustand, und
- Figur 2: eine schematische Ansicht einer Pedalkrafterzeugungsvorrichtung im unbetätigten Zustand.

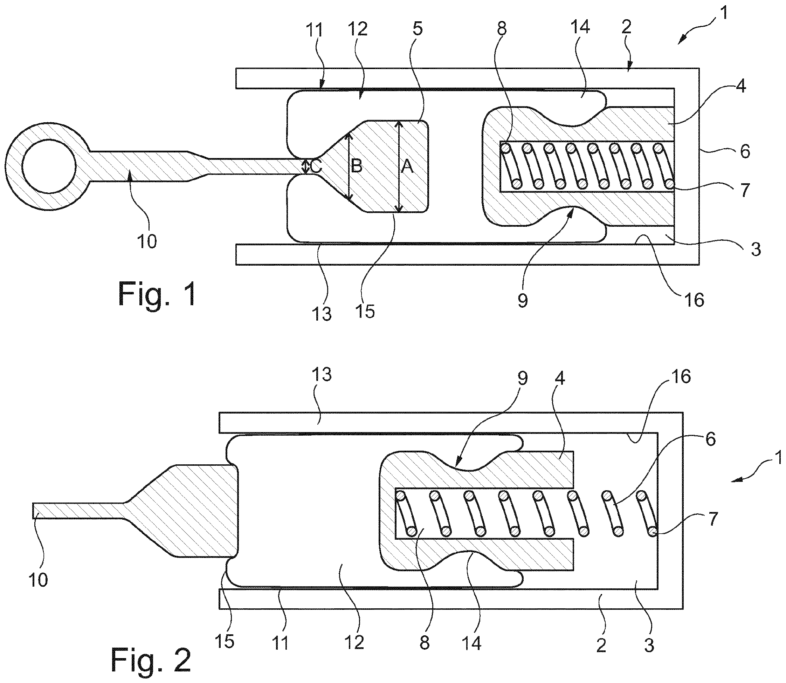

Die Figur 1 und die Figur 2 zeigen eine Pedalkrafterzeugungsvorrichtung 1 im betätigten und im unbetätigten Zustand.

Die Pedalkrafterzeugungsvorrichtung 1 weist einen Zylinder 2 mit einem Zylinderraum 3 auf, in welchem ein erster Kolben 4 und ein zweiter Kolben 5 axial verlagerbar angeordnet sind.

Der erste Kolben 4 ist entgegen der Rückstellkraft des Kraftspeichers 6 in dem Zylinderraum 3 des Zylinders 2 verlagerbar. Dazu stützt sich der Kraftspeicher 6 an deiner Fläche des Kolbens 4 ab und gleichzeitig stützt sich der Kraftspeicher 6 an einer Stirnfläche 7 des Zylinders 2 ab. Der Kraftspeicher 6 ist beispielhaft als Schraubendruckfeder ausgebildet. Er kann jedoch auch anderweitig ausgebildet sein, wie beispielswiese als elastisches Kunststoffelement. Der Kolben 4 weist eine Ausnehmung 8 auf, die sich hin zur Stirnfläche des Zylinders 2 öffnet, so dass der Kraftspeicher 6 in die Ausnehmung 8 eingreifen kann und sich an einer Stirnfläche der Ausnehmung 8 abstützen kann.

Der erste Kolben 4 ist im Ausführungsbeispiel der Figuren 1 und 2 nicht zylindrisch mit konstantem Durchmesser ausgebildet, sondern er weist in Abhängigkeit der Länge des Kolbens 4 einen modulierten Durchmesser auf. Es wird dabei eine Einschnürung 9 gebildet, die bevorzugt umlaufend ist. Alternativ dazu könnte der erste Kolben 4 jedoch auch zylindrisch mit konstantem Durchmesser ausgebildet sein.

Der zweite Kolben 5 ist im Ausführungsbeispiel der Figuren 1 und 2 ebenso nicht zylindrisch mit konstantem Durchmesser ausgebildet, sondern er weist in Abhängigkeit der Länge des Kolbens 5 ebenso einen modulierten Durchmesser auf. Der Durchmesser des Kolbens 5 nimmt hin zur Kolbenstange 10 ab, wie es die verschiedenen Durchmesserbereiche A, B und C andeuten. Dabei nimmt der Durchmesser von A nach B und von B nach C ab. Alternativ dazu könnte der zweite Kolben 5 jedoch auch zylindrisch mit konstantem Durchmesser ausgebildet sein.

Zwischen dem ersten Kolben 4 und dem zweiten Kolben 5 ist ein Membranelement 11 angeordnet, welches eine Kraftübertragung zwischen den Kolben 4, 5 bewirkt. Das Membranelement 11 ist durch eine umlaufende geschlossene und flexible Membran 13 und eine fluide Füllung 12 gekennzeichnet.

Wie es in den Figuren 1 und 2 zu erkennen ist, kann sich das Membranelement in den jeweiligen Spalt 14, 15 zwischen dem Kolben 4 und der Zylinderinnenwand und zwischen dem Kolben 5 und der Zylinderinnenwand 16 einfügen.

Die Figur 1 zeigt einen betätigten Zustand. Dabei dringt der zweite Kolben 5 tief in den Zylinder 2 ein und beaufschlagt den ersten Kolben 4 unter Zwischenschaltung des Membranelements 11. Dieses zwängt sich in die Spalte 14,1 5 und beaufschlagt den ersten Kolben gegen den Kraftspeicher 6 bis der Kolben 4 an der Stirnwand des Zylinders als Wegbegrenzung anstößt.

Die Figur 2 zeigt einen unbetätigten Zustand. Dabei dringt der zweite Kolben 5 nicht so tief in den Zylinder 2 ein und beaufschlagt den ersten Kolben 4 unter Zwischenschaltung des Membranelements 11 nur wenig. Das Membranelement zwängt sich in diesem Zustand nur in den Spalt 14 und beaufschlagt den ersten Kolben nicht oder nur gering gegen den Kraftspeicher 6. Der Kolben 4 wird vom Kraftspeicher 6 von der Stirnwand fern gehalten.

Die erfinderische Ausgestaltung erlaubt je nach Ausführung einen individuell modulierten Kraftverlauf.

Der Zylinder 2 ist dabei wie ein Geberzylinder in seiner Gestalt ausgebildet. Der Kraftspeicher 6 wird als Vorlastfeder genutzt, welche die Hauptgegenkraft erzeugt, wobei der erste Kolben beispielsweise als Kunststoffelement als Nehmerzylinder ausgebildet ist.

Die Membran 13 ist als eine geschlossene Rollmembran oder als mehrere miteinander verbundene Rollmembrane ausgebildet, die ein Fluid enthält. Dazu ist die Membran dicht verschlossen.

Die Kolbenstange 10 ist einerseits mit einem Pedal verbunden und andererseits mit dem zweiten Kolben.

### Bezugszeichenliste

- 1: Pedalkrafterzeugungsvorrichtung
- 2: Zylinder
- 3: Zylinderraum
- 4: erster Kolben
- 5: zweiter Kolben
- 6: Kraftspeicher
- 7: Stirnfläche
- 8: Ausnehmung
- 9: Einschnürung
- 10: Kolbenstange
- 11: Membranelement
- 12: fluide Füllung, Fluid
- 13: Membran
- 14: Spalt
- 15: Spalt

## Patentansprüche

1. Pedalkrafterzeugungsvorrichtung (1) mit einer Kolben-Zylindereinheit mit einem Zylinder (2) und in dem Zylinder angeordneten ersten Kolben (4), der entgegen der Rückstellkraft eines Kraftspeichers (6) verlagerbar ist, wobei in dem Zylinder (2) ein zweiter Kolben (5) verlagerbar angeordnet ist, **dadurch gekennzeichnet, dass** zwischen dem ersten Kolben und dem zweiten Kolben ein geschlossenes, flexibles Membranelement (11) mit einer fluiden Füllung (12) angeordnet ist.

2. Pedalkrafterzeugungsvorrichtung nach Anspruch 1, **dadurch gekennzeichnet, dass** der erste Kolben (4) und/oder der zweite Kolben (5) einen Außendurchmesser aufweist bzw. aufweisen, welcher kleiner ist als der Innendurchmesser des Zylinders.

3. Pedalkrafterzeugungsvorrichtung nach Anspruch 1 oder 2, **dadurch gekennzeichnet, dass** zwischen dem ersten Kolben (4) und der umgebenden Wand des Zylinders (2) ein Spalt (14) ausgebildet ist und/oder zwischen dem zweiten Kolben (5) und der umgebenden Wand des Zylinder (2) ein Spalt (15) ausgebildet ist in welchem das Membranelement (11) zumindest teilweise aufgenommen werden kann.

4. Pedalkrafterzeugungsvorrichtung nach einem der vorhergehenden Ansprüche, **dadurch gekennzeichnet, dass** der Außendurchmesser des ersten Kolbens (4) und/oder der Außendurchmesser des zweiten Kolbens (5) mit der axialen Länge des Kolbens (4,5) veränderlich ausgebildet ist.

5. Pedalkrafterzeugungsvorrichtung nach einem der vorhergehenden Ansprüche, **dadurch gekennzeichnet, dass** der Außendurchmesser des ersten Kolbens (4) und/oder des zweiten Kolbens eine umlaufende Einschnürung (9) oder mehrere umlaufende Einschnürungen (9) ausbildet.

6. Pedalkrafterzeugungsvorrichtung nach einem der vorhergehenden Ansprüche, **dadurch gekennzeichnet, dass** der zweite Kolben (5) mit einer Kolbenstange (10) verbunden ist und der Außendurchmesser des zweiten Kolbens (5) hin zur Kolbenstange (10) abnimmt.

7. Pedalkrafterzeugungsvorrichtung nach einem der vorhergehenden Ansprüche, **dadurch gekennzeichnet, dass** der erste Kolben (4) an einer Stirnfläche eine Ausnehmung (8) aufweist, in welche der Kraftspeicher eingreift.

8. Pedalkrafterzeugungsvorrichtung nach einem der vorhergehenden Ansprüche, **dadurch gekennzeichnet, dass** der Kraftspeicher (6) sich zwischen dem Kolben und einer Innenfläche des Zylinders abstützt.

9. Pedalkrafterzeugungsvorrichtung nach einem der vorhergehenden Ansprüche, **dadurch gekennzeichnet, dass** die Membran (13) eine Rollmembran ist.

## Claims

1. Pedal force generating apparatus (1) having a piston/cylinder unit with a cylinder (2) and a first piston (4) which is arranged in the cylinder and can be moved counter to the restoring force of a force accumulator (6), a second piston (5) being arranged movably in the cylinder (2), **characterized in that** a closed, flexible diaphragm element (11) with a fluid filling (12) is arranged between the first piston and the second piston.

2. Pedal force generating apparatus according to Claim 1, **characterized in that** the first piston (4) and/or the second piston (5) have/has an external diameter which is smaller than the internal diameter of the cylinder.

3. Pedal force generating apparatus according to Claim 1 or 2, **characterized in that** a gap (14) is configured between the first piston (4) and the surrounding wall of the cylinder (2) and/or a gap (15) is configured between the second piston (5) and the surrounding wall of the cylinder (2), in which gap (15) the diaphragm element (11) can be received at least partially.

4. Pedal force generating apparatus according to one of the preceding claims, **characterized in that** the external diameter of the first piston (4) and/or the external diameter of the second piston (5) are/is of varying configuration with the axial length of the piston (4, 5).

5. Pedal force generating apparatus according to one of the preceding claims, **characterized in that** the external diameter of the first piston (4) and/or the second piston configures a circumferential constriction (9) or a plurality of circumferential constrictions (9).

6. Pedal force generating apparatus according to one of the preceding claims, **characterized in that** the second piston (5) is connected to a piston rod (10), and the external diameter of the second piston (5) decreases towards the piston rod (10).

7. Pedal force generating apparatus according to one of the preceding claims, **characterized in that** the first piston (4) has a recess (8) on an end face, into which recess (8) the force accumulator engages.

8. Pedal force generating apparatus according to one of the preceding claims, **characterized in that** the force accumulator (6) is supported between the piston and an inner face of the cylinder.

9. Pedal force generating apparatus according to one of the preceding claims, **characterized in that** the diaphragm (13) is a roller diaphragm.

## Revendications

1. Dispositif de génération de force de pédalage (1), comprenant un ensemble piston-cylindre pourvu d'un cylindre (2) et d'un premier piston (4) disposé dans le cylindre, lequel peut être positionné en s'opposant à la force de rappel d'un accumulateur d'énergie (6), un deuxième piston (5) étant disposé de manière positionnable dans le cylindre (2), **caractérisé en ce qu'**un élément à membrane (11) flexible, fermé, avec une charge de flue (12) est disposé entre le premier piston et le deuxième piston.

2. Dispositif de génération de force de pédalage selon la revendication 1, **caractérisé en ce que** le premier piston (4) et/ou le deuxième piston (5) possède ou possèdent un diamètre extérieur qui est inférieur au diamètre intérieur du cylindre.

3. Dispositif de génération de force de pédalage selon la revendication 1 ou 2, **caractérisé en ce qu'**un écartement (14) est formé entre le premier piston (4) et la paroi environnante du cylindre (2) et/ou un écartement (15) est formé entre le deuxième piston (5) et la paroi environnante du cylindre (2), dans lequel l'élément à membrane (11) peut au moins partiellement être accueilli.

4. Dispositif de génération de force de pédalage selon l'une des revendications précédentes, **caractérisé en ce que** le diamètre extérieur du premier piston (4) et/ou le diamètre extérieur du deuxième piston (5) sont configurés variables en fonction de la longueur axiale du piston (4, 5).

5. Dispositif de génération de force de pédalage selon l'une des revendications précédentes, **caractérisé en ce que** le diamètre extérieur du premier piston (4) et/ou du deuxième piston forme un rétrécissement circonférentiel (9) ou plusieurs rétrécissements circonférentiels (9).

6. Dispositif de génération de force de pédalage selon l'une des revendications précédentes, **caractérisé en ce que** le deuxième piston (5) est relié à une tige de piston (10) et le diamètre extérieur du deuxième piston (5) diminue en direction de la tige de piston (10).

7. Dispositif de génération de force de pédalage selon l'une des revendications précédentes, **caractérisé en ce que** le premier piston (4) possède au niveau d'une face frontale une cavité (8) dans laquelle vient en prise l'accumulateur d'énergie.

8. Dispositif de génération de force de pédalage selon l'une des revendications précédentes, **caractérisé en ce que** l'accumulateur d'énergie (6) prend appui entre le piston et une surface intérieure du cylindre.

9. Dispositif de génération de force de pédalage selon l'une des revendications précédentes, **caractérisé en ce que** la membrane (13) est une membrane déroulante.
